Europäisches Patentamt

European Patent Office

Office européen des brevets

(19)

(11) Numéro de publication: **0 029 823**
**B1**

(12) **FASCICULE DE BREVET EUROPEEN**

(45) Date de publication du fascicule du brevet:
**14.03.84**

(51) Int. Cl.³: **G 05 F 3/20**

(21) Numéro de dépôt: **81200130.3**

(22) Date de dépôt: **13.06.80**

(60) Numéro de publication de la demande initiale en
application de l'article 76 CBE:

(54) **Circuit de pondération de courants.**

(30) Priorité: **25.06.79 FR 7916261**

(43) Date de publication de la demande:
**03.06.81 Bulletin 81/22**

(45) Mention de la délivrance du brevet:
**14.03.84 Bulletin 84/11**

(84) Etats contractants désignés:
**BE CH DE FR GB LI SE**

(56) Documents cités:
**DE - A - 2 649 351**
**FR - A - 2 001 583**
**GB - A - 2 001 508**
**GB - A - 2 007 463**
**US - A - 3 588 672**

(73) Titulaire: **TELECOMMUNICATIONS
RADIOELECTRIQUES ET TELEPHONIQUES T.R.T.,
88, rue Brillat Savarin, F-75013 Paris (FR)**

(72) Inventeur: **Ferrieu, Gilbert Marie Marcel, SOCIETE
CIVILE S.P.I.D. 209 rue de L'Université, F-75007 Paris
(FR)**

(74) Mandataire: **Tissot, Jean et al, Société Civile
S.P.I.D. 209, rue de l'Université, F-75007 Paris (FR)**

BUNDESDRUCKEREI BERLIN

Circuit de ponderation de courants

L'invention concerne un circuit destiné à pondérer un courant d'entrée par un coefficient déterminé et plus généralement un circuit destiné à pondérer des courants d'entrée par des coefficients déterminés et à former la somme de ces courants d'entrée pondérés.

De tels circuits sont utilisables par exemple dans un joncteur d'abonné (circuit d'interface de ligne d'abonné dans lequel on a besoin de former un courant résultant de la somme pondérée des courants entrant dans la ligne d'abonné et sortant de la ligne d'abonné).

Un circuit servant à former un courant de sortie par pondération d'un courant d'entrée avec un coefficient déterminé est souvent appelé miroir de courant. Les miroirs de courant connus (par exemplele circuit de Wilson dérit dans le brevet américain 3 588 672) sont souvent formés à partir d'un circuit comportant deux transistors dont les émetteurs d'une part et les basis d'autre part sont interconnectés, l'un de ces transistors ayant son collecteur qui est relié à sa base pour fonctionner, comme sa diode base-émetteur. Dans ce circuit, le rapport entre les courants de collecteur des deux transistors, c'est-à-dire le coefficient de pondération de l'un des courants, ne dépend pratiquement que des caractéristiques des diodes base-émetteur des deux transistors; lorsque ces deux transistors sont intégrés sont intégrés sur un même corps semi-conducteur, ce rapport de courants ne dépend pratiquement, pour une valeur d'un des courants, que du rapport des surfaces d'émitteur des transistors.

Or dans certains cas, on peut avoir besoin de miroirs de courant aisément ajustables pour obtenir des valeurs déterminées et précises de leurs rapports de courants. On peut aussi avoir besoin de réaliser des miroirs de courant à rapports de courants pratiquement égaux. Mais il est clair pour l'homme de l'art que les miroirs de courant connus ne permettent ni d'obtenir par construction des valeurs précises de rapports de courant, ni de réaliser un réglage de ces rapports. D'autre part, ces miroirs de courant connus ont aussi l'inconvénient que le domaine de courants dans lequel le rapport de courants reste pratiquement constant, est assez limité. Les miroirs de courant connus sont donc mal adaptés à des applications dans lesquelles on a besoin de réaliser des rapports de courants précis et réglables dans un large domaine de courant.

Des problèmes de pondération précise et réglable de courants dans un large domaine de courant se posent par exemple dans un joncteur d'abonné téléphonique décrit dans la demande de brevet français n° 2 430 153 et dans le certificat d'addition français n° 2 437 757 déposés au nom de la demanderesse. Dans ce joncteur on forme un courant de somme pondérée des sourants entrant dans la ligne d'abonné et sortant de la ligne d'abonné et deux tensions déduites de ce courant sont appliquées de façon contreréactive sur les deux bornes d'entrée de l'amplificateur alimentant la ligne d'abonné.

Dans ce joncteur d'abonné, pour tenir les caractéristiques de symétrie de résistance de pont d'alimentation et d'impédance pour les courants de conversation, il est très important que dans le courant de somme pondérée le courant entrant dans la ligne d'abonné et le courant sortant de la ligne d'abonné interviennent avec des coefficients de pondération pratiquement égaux. D'autre part pour amener lesdites résistance et impédance à des valeurs déterminées spécifiées, il est très utile d'avoir un moyen simple de régler le courant de somme pondérée en conservant des coefficients de pondération égaux. Ces exigences sont difficiles à satisfaire si l'on utilise des miroirs de courant classiques pour former le courant de somme pondérée des courants entrant dans la ligne d'abonné et sortant de la ligne d'abonné.

La présente invention vise donc à fournir un circuit à pondérer un courant d'entrée et plus généralement un circuit servant à pondérer des courants d'entrée et à en former la somme, avec des coefficients de pondération réglables de façon précise pour amener ces coefficients à des valeurs déterminées, indépendantes des courants d'entrée et indépendantes des caractéristiques des semi-conducteurs du circuit.

Pour pondérer un courant d'entrée par un coefficient déterminé, circuit conforme à l'invention comporte un premier transistor dont l'émetteur est couplé à une borne d'entrée pour ledit courant d'entrée, ladite borne d'entrée étant connectée à une borne d'alimentation, à travers une première résistance, ce premier transistor ayant son collecteur alimenté par une source de courant et sa base est connectée à une source de courant et à une diode reliée à l'émetteur d'un deuxième transistor simple ou composite, ce deuxième transistor ayant son émetteur relié à ladite borne d'alimentation à travers une deuxième résistance, sa base reliée au collecteur du premier transistor et enfin son collecteur relié à la borne de sortie dudit circuit, le coefficient de pondération du courant d'entrée étant déterminé par le rapport de la valeur de la première résistance à la valeur de la deuxième résistance.

Un tel circuit qui remplit le rôle d'un miroir de courant présente l'avantage que le rapport entre les courants de sortie et d'entrée ou coefficient de pondération du courant d'entrée ne dépend que du rapport de deux résistances et peut être réglé aisément avec la précision que l'on désire, par réglage de résistances.

Le circuit conforme à l'invention peut être agencé pour former la somme de courants d'entrée pondérés par des coefficients déterminés et différents. Dans ce cas l'émetteur du premier transistor est relié à une borne d'entrée pour un courant d'entrée à travers une résistance et relié à une autre borne dèntrée pour un autre courant d'entrée, de sorte que sur la borne de sortie du circuit apparaît la somme des courants d'entrée pondérés chacun avec un coefficient de pondération qui est déterminé par le rapport de la valeur ohmique du circuit résistant présent entre la borne d'entrée pour le courant d'entrée et la borne d'alimentation, à la valeur de la deuxième résistance.

Ce circuit présente les mêmes avantages que le circuit de pondération d'un courant d'entrée, les coefficients de pondération ne dèpendant que de rapport de résistances et pouvant être réglés par réglage de résistances.

Le circuit conforme à l'invention ainsi agencé pour former la somme de courants d'entrée pondérés peut être utilisé pour former la somme de deux courants d'entrée pondérés par le même coefficient de pondération. Dans ce cas, sur une première borne d'entrée qui est reliée à ladite première résistance est appliqué un premier courant d'entrée et sur une deuxième borne d'entrée qui est reliée à l'émetteur du premier transistor est appliqué un courant résultant de la pondération d'un deuxième courant d'entrée par un coefficient k, le rapport de la valeur de ladite première résistance à la valeur ohmique du circuit résistant entre la deuxième borne d'entrée et ladite borne d'alimentation étant réglé pour être égal au coefficient k, de sorte que les premier et deuxième courants d'entrée sont pondérés avec le même coefficient de pondération détermine par le rapport de la valeur de ladite première résistance à la valeur de ladite deuxième résistance.

On peut associer à cette version du circuit conforme à l'invention, munie d'une première entrée et d'une deuxième entrée, un autre circuit conforme à l'invention qui pondère le deuxième courant d'entrée par le coefficient k, ce deuxième courant d'entrée ainsi pondéré étant appliqué à ladite deuxième entrée.

Comme on l'a indiqué, les circuits de pondération de la présente invention trouvent une utilisation intéressante dans les joncteurs d'abonné du type précité où l'on a besoin de former la somme de courants pondérés, avec le même coefficient de pondération. Cette utilisation est décrite dans la demande initiale de brevet européen n° 0 021 509 (80 200 548.8), correspondant à la présente demande de brevet divisionnaire.

La description suivante en regard des desssins annexés, le tout donné à titre d'exemple, fera bien comprendre comment l'invention peut être réalisée.

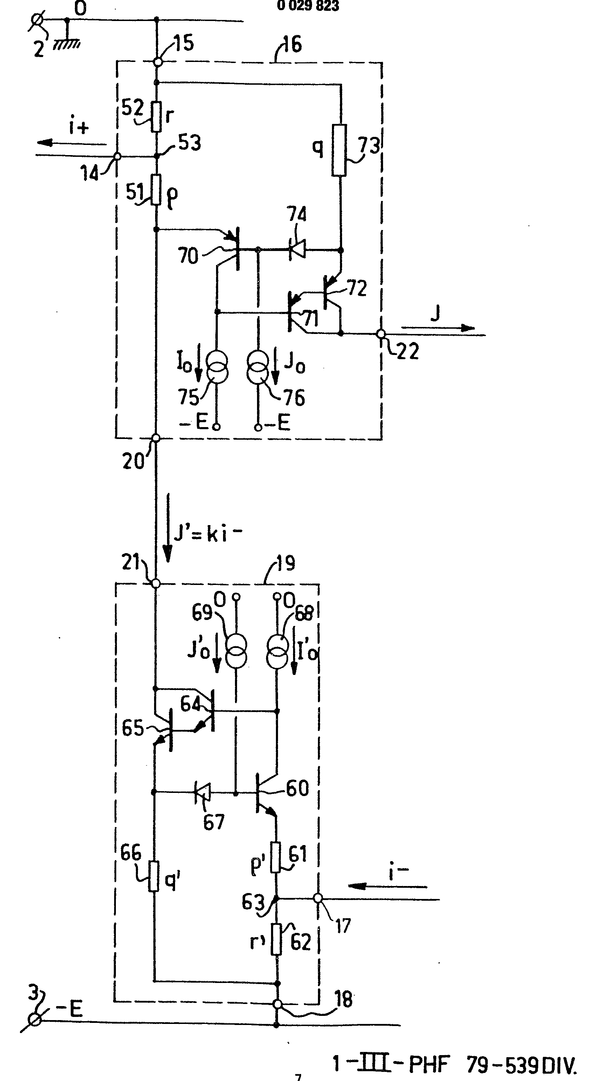

La figure unique représente un arrangement de deux circuits de pondération de courants conforme à l'invention.

Sur la figure on a représenté un agencement de deux circuits conformes à l'invention. Le circuit 19 représenté en bas de la figure est un circuit à fonction de miroir de courant qui est destiné à pondérer un courant d'entrée par un coefficient et le circuit 16 représenté en haut de la figure est destiné à pondérer plusieurs courants d'entrée par des coefficients et à former la somme de ces courants d'entrée pondérés. On va d'abord décrire chacun des circuits 19 et 16 qui peuvent parfaitement être utilisés séparément, puis on décrira leur agencement suivant la figure, qui peut être utilisé par exemple dans le joncteur d'abonné décrit dans la demande initiale de brevet européen n° 0 021 509.

Le circurit à fonction de miroir de courant 19 comporte une borne d'entrée 17 sur laquelle apparaît le courant d'entrée $i^-$, une borne d'alimentation 18 qui est reliée à la borne négative 3 d'une source d'alimentation continue, cette borne 3 étant au potentiel $-E$. La borne positive 2 de cette source d'alimentation est au potentiel zéro de la masse. Ce circuit 19 a pour but de faire apparaître sur sa borne de sortie 21 un courant de sortie $J' = ki^-$, résultant de la pondération du courant $i^-$ par un coefficient de pondération k inférieur ou égal à 1. Les courants d'entrée et de sortie $i^-$ et $J'$ ont le même sens vis à vis des bornes d'entrée et de sortie 17 et 21.

Le circuit 19 est constitué par un premier transistor npn 60 dont l'émetteur est relié à la borne d'alimentation 18 à travers les résistances en série 61 et 62 de valeurs respectives $\varrho'$ et $r'$, la résistance 62 ayant sa borne 63 reliée à la borne d'entrée 17 et son autre borne reliée à la borne d'alimentation 18. Le collecteur du transistor 60 est relié à une borne de la source de courant 68 fournissant le courant $I'_0$. La base du transistor 60 est connectée à une borne de la source de courant 69 fournissant le courant $J'_0$. L'autre borne des sources de courant 68 et 69 est au potentiel zéro. La base du transistor est également reliée à travers la diode 67 à l'émetteur du transistor 65. Les transistors npn 64 et 65 sont montés ensemble selon le montage connu de Darlington pour former un transistor composite de très fort gain. L'émetteur de ce transistor composite 64, 65, qui est l'émetteur du transistor 65 est relié à la borne d'alimentation 18 à travers la résistance 66 de valeur $q'$. La base du transistor composite qui est la basse du transistor 64 est reliée au collecteur du transistor 60. Enfin les collecteurs interconnectés des deux transistors 64 et 65 sont reliés à la borne de sortie 21 du circuit 19.

Le fonctionnement de ce circuit 19 peut être décrit de façon suivante. En négligeant les courants de base du transistor 60 et du transistor 64, on voit, en tenant compte des sens de courant indiqués, que la résistance $\varrho'$ est parcourue par le courant $I'_0$ et la résistance $r'$ par le courant $I'_0 + i^-$. En faisant la même approximation, on voit aussi que la résistance $q'$ est parcourue par $J' + J'_0$. Les chutes de tension à travers la diode 67 et la diode base-émetteur du transistor 60 étant très voisines, les tensions sur les émetteurs des transistors 60 et 65 sont pratiquement les mêmes ce qui se traduit par la relation:

$$\rho' \, l'_0 + r'(l'_0 + i^-) = q'(J' + J'_0),$$

$$J' = \frac{r'}{q'} \, i^- + \left[ l'_0 \frac{r' + \rho'}{q'} - J'_0 \right].$$

Les courants $l'_0$ et $J'_0$ fournis par les sources de courants 68 et 69 sont des courants de polarisation faibles (de l'ordre de quelques dizaines de μA) et peuvent d'ailleurs être égaux. Le terme de différence entre crochets dans l'expression de J' ci-dessus est très faible et peut être complètement annulé si on le désire. Par exemple si $l'_0 = J'_0$, ce terme de différence est annulé si $r' + \rho' = q$. On obtient alors:

$$J' = \frac{r'}{q'} \, i^-. \tag{1}$$

Le circuit 19 se comporte donc comme un miroir de courant fournissant un courant de sortie J' résultant de la pondération du courant d'entrée $i^-$ par un coefficient $k = \frac{r'}{q'}$ ne dépendant que du rapport des deux résitances $\frac{r'}{q'}$. Ce coefficient de pondération k est indépendant des caractéristiques des transistors et diodes du circuit et par conséquent indépendant du courant d'entrée $i^-$. Il peut être aisément réglé, de façon aussi précise que l'on veut, en réglant une résistance, par exemple la résistance q', sans que le terme de différence entre crochets de l'expression de J' s'éloigne pratiquement de zéro.

Le circuit 16 de pondération de courants d'entrée et de sommation de ces courants d'entrée pondérés est construit de façon ressemblant beaucoup au circuit 19. Ce circuit 16 comporte une borne d'alimentation 15 qui est reliée à la borne positive 2 de la source d'alimentation. Dans l'exemple représenté, le circuit 16 reçoit deux courants d'entrée, un courant d'entrée $i^+$ apparaît sur sa borne d'entrée 14 et un courant d'entrée J' apparaît sur a borne d'entrée 20 que l'on suppose pour l'instant non connectée au circuit miroir de courant 19. Le circuit 16 a pour but de faire apparaître sur sa borne de sortie 22 un courant de sortie J résultant de la pondération des courants d'entrée $i^+$ et J' par des coefficients de pondération inférieurs ou égaux à 1. Les courants d'entrée $i^+$, J' et de sortie J ont le même sens vis à vis des bornes 14, 20, 22.

Le circuit 16 est constitué par un premier transistor pnp 70 dont l'émetteur est relié à la borne d'alimentation 15 à travers les résistances en série 51 et 52 de valeurs respectives $\rho$ et r. La borne de la résistance 51 reliée à l'émetteur du transistor 70 est reliée à la borne d'entrée 20 et la borne 53 interconnectant les résistances 51 et 52 est reliée à la borne d'entrée 14. Le collecteur du transistor 70 est relié à une borne de la source de courant 75 fournissant le courant $l_0$. La base du transistor 70 est reliée à une borne de la source de courant 76 fournissant le courant $J_0$. L'autre borne des sources de courant 75 et 76 est au potentiel $-$ E. La base du transistor 70 est également reliée à travers la diode 74 à l'émetteur du transistor 72. Les transistors pnp 71 et 72 sont montés ensemble selon le montage de Darlington pour former un transistor composite de très fort gain. L'émetteur de ce transistor composite 71, 72, qui est l'émetteur du transistor 72 est relié à la borne d'alimentation 15 à travers la résistance 73 de valeur q. La base du transistor composite qui est la base du transistor 71 est reliée au collecteur du transistor 70. Enfin les collecteurs interconnectés des deux transistors 71 et 72 sont reliés à la borne de sortie 22 du circuit 16.

On peut décrire comme suit le fonctionnement de ce circuit 16. En négligeant les courants de base des transistors 70 et 71, on voit que la résistance $\rho$ est parcourue par le courant $J' + l_0$, la résistance r est parcourue par le courant $J' + l_0 + i^+$ et enfin la résistance q est parcourue par le courant $J + J_0$. Les chutes de tension à travers la diode 74 et la diode base-émetteur du transistor 70 sont très voisines de sorte que les tensions sur les émetteurs des transistors 70 et 72 sont pratiquement les mêmes. Il en résulte la relation:

$$\rho(J' + l_0) + r(J' + l_0 + i^+) = q(J + J_0).$$

$$J = \frac{r}{q} \, i^+ + \frac{r + \rho}{q} \, J' + \left[ l_0 \frac{r + \rho}{q} - J_0 \right].$$

Les courants $l_0$ et $J_0$ sont des courants de polarisation faibles et le terme de différence entre crochets dans l'expression de J est très faible et peut être complètement annulé si on le désire. On obtient alors pratiquement:

$$J = \frac{r}{q} \, i^+ + \frac{r + \rho}{q} \, J'. \tag{2}$$

Le circuit 16 permet de pondérer les courants d'entrée $i^+$ et J' par les coefficients de pondération respectifs

$$\frac{r}{q} \quad \text{et} \quad \frac{r + \rho}{q}$$

et de former le courant de sortie J, comme la somme de ces courants d'entrée pondérés. Ces coefficients de pondération ne dépendent pas des transistors et diodes du circuit et peuvent être ajustés par réglage de valeurs de résistances.

On remarque d'après la formule (2) que dans l'expression du courant de sortie J les deux courants d'entrée $i^+$ et J' du circuit 16 sont pondérés avec des coefficients de pondération différents. Si l'on désire pondérer deux courants avec les mêmes coefficients de pondération et former la somme de ces deux courants pondérés, il est avantageux d'associer au circuit 16, un circuit miroir de courant. Il est particulièrement avantageux d'associer au circuit 16 le circuit miroir de courant 19, comme l'indique la figure. On voit sur cette figure que la sortie 21 du circuit 19 est reliée à l'entrée 20 du circuit 16. On considère que l'un des courants à pondérer est le courant i⁻ appliqué à l'entrée 17 du circuit miroir de courant 19 et que l'autre courant à pondérer est le courant i⁺ appliqué à l'entrée 14 du circuit 16. Comme le circuit 19 pondère le courant i⁻ avec un coefficient k, le courant J' appliqué à l'entrée 20 du circuit 16 vaut J' = ki⁻. Le courant J fourni par le circuit 16 peut alors s'écrire d'après la formule (2):

$$J = \frac{r}{q}\, i^+ + \frac{r + \rho}{q}\, ki^-.$$

Si dans le circuit 16, les résistances r et $\rho$ sont réglées de telle façon que:

$$\frac{r}{r + \rho} = k,$$

on a:

$$J = \frac{r}{q}\, (i^+ + i^-). \qquad (3)$$

On a donc obtenu en réglant les résistances r et $\rho$ de façon que $\frac{r}{r + \rho} = k$, que dans le courant de sortie J du circuit 16, les deux courants i⁺ et i⁻ soient pondérés par le même coefficient de pondération $\frac{r}{q}$. En réglant ensuite la résistance q, on peut modifier ce coefficient de pondération, c'est-à-dire changer l'amplitude du courant de sortie J, sans retoucher la condition d'égalité des coefficients de pondération. On pourrait bien entendu utiliser aussi, dans l'association de la figure, à la place du circuit 19 décrit, un circuit miroir de courant connu, n'ayant toutefois pas les mêmes avantages.

Les circuits 16 et 19 décrits à la figure sont construits respectivement à l'aide de transistors pnp et npn et sont alimentés par des tensions de polarités correspondantes. Il est évident qu'ils pourraient être construits avec des transistors de type opposé avec des tensions d'alimentation de polarité opposée.

**Revendications**

1. Circuit de pondération d'un courant d'entrée (i⁺) par un coefficient déterminé, caractérisé en ce qu'il comporte un premier transistor (70) dont l'émetteur est couplé à une borne d'entrée (14) pour ledit courant d'entrée, ladite borne d'entrée (14) étant connectée à une borne d'alimentation (15) à travers une première résistance (52), ce premier transistor (70) ayant son collecteur alimenté par une source de courant (75) et sa base est connectée à une source de courant (76) et à une diode (74) reliée à l'émetteur d'un deuxième transistor (71, 72) simple ou composite, ce deuxième transistor (71, 72) ayant son émetteur relié à ladite borne d'alimentation (15) à travers une deuxième résistance (73), sa base reliée au collecteur du premier transistor (70) et enfin son collecteur relié à la borne de sortie (22) dudit circuit, le coefficient de pondération du courant d'entrée étant déterminé par le rapport de la valeur (r) de la première résistance (52) à la valeur (q) de la deuxième résistance (73).

2. Circuit selon la revendication 1, caractérisé en ce que l'émetteur du premier transistor (70) est connecté à ladite borne d'entrée (14) à travers une résistance (51) et relié à une autre borne d'entrée (20) pour un autre courant d'entrée (J'), de sorte que sur la borne de sortie (22) dudit circuit apparaît la somme (J) des courants d'entrée (i⁺), (J') pondérés chacun avec un coefficient de pondération qui est déterminé par le rapport de la valeur ohmique (r ou r+ϱ) du circuit résistant présent entre la borne d'entrée (14 ou 20) pour le courant d'entrée (i⁺ ou J') et la borne d'alimentation (15), à la valeur (q) de la deuxième résistance (73).

3. Circuit selon la revendication 2, caractérisé en ce que sur une première borne d'entrée (14) qui est reliée à ladite première résistance (52) est appliqué un premier courant d'entrée (i⁺) et sur une deuxième borne d'entrée (20) qui est reliée à l'émetteur du premier transistor (70) est appliqué un courant (J') résultant de la pondération d'un deuxième courant d'entrée (i⁻) par un coefficient k, le rapport de la valeur (r) de ladite première résistance (52) à la valeur ohmique (r+ϱ) du circuit résistant entre la deuxième borne d'entrée (20) et ladite borne d'alimentation (15) étant réglé pour être égal au coefficient k, de sorte que les premier et deuxième courants d'entrée (i⁺ et i⁻) sont pondérés avec le même coefficient de pondération déterminé par le rapport de la valeur (r) de ladite première résistance (52) + la valeur (q) de ladite deuxième résistance (73).

4. Circuit (16) selon la revendication 3 associé à un circuit (19) selon la revendication 1, ce dernier circuit (19) fournissant à l'autre circuit (16) ledit courant (J') résultant de la pondération du deuxième courant d'entrée (i⁻) par un coefficient k.

**Patentansprüche**

1. Stromwaageschaltung für einen Eingangsstrom (i⁺) mit einem bestimmten Koeffizienten, dadurch gekennzeichnet, daß die Schaltungsanordnung einen ersten Transistor (70) anhält, dessen Emitter mit einer Eingangsklemme (14) für den genannten Eingangsstrom gekoppelt ist, wobei die genannte Eingangsklemme (14) über einen ersten Widerstand (52) mit einer Speiseklemme verbunden ist, wobei der Kollektor des ersten Transistors (70) durch eine Stromquelle (75) gespeist wird und die Basis mit einer Stromquelle (76) und einer Diode (74) verbunden ist, die mit dem Emitter eines einfachen oder zusammengestellten zweiten Transistors (71, 72) verbunden ist, wobei von dem zweiten Transistor (71, 72) der Emitter über einen zweiten Widerstand (73) mit der genannten Speiseklemme (15) verbunden ist, während die Basis mit dem Kollektor des ersten Transistors (70) und schließlich der Kollektor mit der Ausgangsklemme (22) der genannten Schaltungsanordnung verbunden ist, wobei der Gewichtungskoeffizient des Eingangsstromes durch das Verhältnis zwischen dem Wert (r) des ersten Widerstandes (52) und dem Wert (q) des zweiten Widerstandes (73) bestimmt wird.

2. Schaltungsanordnung nach Anspruch 1, dadurch gekennzeichnet, daß der Emitter des ersten Transistors (70) über einen Widerstand (51) mit der genannten Eingangsklemme (14) und mit einer anderen Eingangsklemme (20) für einen anderen Eingangsstrom verbunden ist, so daß an der Ausgangsklemme (22) der genannten Schaltungsanordnung die Summe (J) der Eingangsströme (i+), (J') erscheint, die jeweils mit einem Gewichtskoeffizienten gewichtet sind, der durch das Verhältnis zwischen dem ohmschen Wert (r oder r+P) der Widerstandsschaltung zwischen der Eingangsklemme (14 oder 20) für den Eingangsstrom (i+ oder J') und der Speiseklemme (15) und dem Wert (q) des zweiten Widerstandes (73) bestimmt wird.

3. Schaltungsanordnung nach Anspruch 2, dadurch gekennzeichnet, daß ein erster Eingangsstrom (i+) einer ersten Eingangsklemme (14) zugeführt wird, die mit dem genannten ersten Widerstand (52) verbunden ist und ein Strom (J'), der das Ergebnis der Gewichtung eines zweiten Eingangsstromes (i−) mit einem Koeffizienten k ist, einer zweiten Eingangsklemme (20) zugeführt wird, die mit dem Emitter des ersten Transistors (70) verbunden ist, wobei das Verhältnis zwischen dem Wert (r) des ersten Widerstandes (52) und dem ohmschen Wert (f+p) der Widerstandsschaltung zwischen der zweiten Eingangsklemme (20) und der genannten Speiseklemme (15) derart geregelt wird, daß es dem Koeffizienten k entspricht, so daß die ersten und zweiten Eingangsströme (i+ und i−) mit demselben Gewichtskoeffizienten gewichtet werden, welcher Koeffizient durch das Verhältnis zwischen dem Wert (r) des genannten ersten Widerstandes (52) und dem Wert (q) des genannten zweiten Widerstandes (73) bestimmt wird.

4. Schaltungsanordnung (16) nach Anspruch 3, in Zusammenhang mit einer Schaltungsanordnung (19) nach Anpsruch 1, wobei die letztgenannte Schaltungsanordnung (19) den genannten Strom (J'), der das Resultat der Gewichtung des zweiten Eingangsstromes (i−) mit einem Koeffizienten k ist, der anderen Schaltungsanordnung (16) zuführt.

## Claims

1. A circuit for weighting an input circuit (i+) with a predetermined coefficient, characterized in that it comprises a first transistor (70) whose emitter is coupled to an input terminal (14) for the said input current, the said input terminal (14) being connected to a power supply terminal (15) via a first resistor (52), the first transistor (70) having its collector supplied by a current source (75) and its base connected to a current source (76) and a diode (74) which is connected to the emitter of a single or a composite second transistor (71, 72), the second transistor (71, 72) having its emitter connected to the said power supply terminal (15) via a second resistor (73), its base connected to the collektor of the first transistor (70) and finally its collector connected to the output terminal (22) of the said circuit, the weighting coefficient of the input current being determined by the ratio between the value (r) of the first resistor (52) and the value (q) of the second resistor (73).

2. A circuit as claimed in Claim 1, characterized in that the emitter of the first transistor (70) is connected to the said input terminal (14) via a resistor (51) and to another input terminal (20) for another input current (J'), so that at the output terminal (22) of the said circuit there appears the sum (J) of the input currents (i+), (J') each weighted with a weighting coefficient which is determined by the ratio between the ohmic value (r or r +p) of the resistive circuit arranged between the input terminal (14 or 20) for the input current (i+ or J') and the power supply terminal (15), and the value (q) of the second resistor (73).

3. A circuit as claimed in Claim 2, characterized in that a first input current (i+) is applied to a first input terminal (14) which is connected to the said first resistor (52) and a current (J') which is the result of weighting a second input current (i−) with a coefficient k) is applied to a second input terminal (20) which is connected to the emitter of the first transistor (70) the ratio between the value (r) of the said first resistor (52) and the ohmic value (f+p) of the resistive circuit between the second input therminal (20) and the said power supply terminal (15) being controlled so as to make it equal to the coefficient k, so that the first and second input currents (i+ and i−) are weighted with the same weighting coefficient determined by the ratio between the value (r) of the said first resistor (52) and the value (q) of the said second resistor (73).

4. A circuit (16) as claimed in Claim 3, which is associated with a circuit (19) as claimed in Claim 1, this last-mentioned circuit (19) applying to the other circuit (16) the said current (J') which result from weighting the second input current (i−) with a coefficient k.

0 029 823

1-Ⅲ-PHF 79-539 DIV.